# EUROPÄISCHE PATENTANMELDUNG

(11) **EP 1 563 897 A1**
(43) Veröffentlichungstag der Anmeldung: **17.08.2005**
(21) Anmeldenummer: 05002005.6
(22) Anmeldetag: 01.02.2005
(51) Int. Cl.: B01J 2/20, B29B 9/06

(54) **Vorrichtung zur Herstellung gerundeter Pellets**

(30) Priorität: 16.02.2004 DE 102004007713
(71) Anmelder: Leistritz Extrusionstechnik GmbH, 90459 Nürnberg (DE)
(72) Erfinder: Rein, Robert, 90443 Nürnberg (DE)
(74) Vertreter: LINDNER BLAUMEIER & KOLLEGEN Patent- und Rechtsanwälte

(57) **Zusammenfassung**

Vorrichtung zur Herstellung gerundeter Pellets aus einem von einer vorgeschalteten Zufuhreinrichtung, insbesondere einem Extruder zugeführten verformbaren Material, umfassend ein Gehäuse mit einer rotierenden Schneideinheit zum Schneiden des Materials in Materialabschnitte, sowie Mittel zur Erzeugung eines Gasstroms im Gehäuse, durch dessen Wirkung die Materialabschnitte gegen eine Gehäusewand prallen, wobei sie sich abrunden, dadurch gekennzeichnet, dass eine Einrichtung zum zumindest abschnittsweisen Kühlen der Gehäusewand vorgesehen ist.

## Beschreibung

Die Erfindung betrifft eine Vorrichtung zur Herstellung gerundeter Pellets aus einem von einer vorgeschalteten Zufuhreinrichtung, insbesondere einem Exruder zugeführten verformbaren Material, umfassend ein Gehäuse mit einer rotierenden Schneideinheit zum Schneiden des Materials in Materialabschnitte, sowie Mittel zur Erzeugung eines Gasstroms im Gehäuse, durch dessen Wirkung die Materialabschnitte gegen eine Gehäusewand prallen, wobei sie sich abrunden.

Solche Vorrichtungen, häufig auch Granulatoren oder Pelletizer genannt, dienen zur Herstellung kleiner, in der Regel rundlicher oder gerundeter Pellets, also Materialteilchen aus einem geschnittenen, während des Schneidzeitpunktes noch weichen, verformbaren Material, das in der Regel über einen Extruder zugeführt wird. Diese Vorrichtungen kommen beispielsweise im Pharmabereich zum Einsatz. Verarbeitet werden hierbei typischerweise pharmazeutische Hilfsstoffe wie microkristalline Zellulose, Stärke, Wachse, Polymere etc. mit mindestens einem pharmazeutischen Wirkstoff. Das zugeführte Material tritt im Schneidgehäuse aus einem entsprechenden Düsenkopf aus. Über eine schnell rotierende Schneideinrichtung mit einem entsprechenden Schneidmesser werden die austretenden Materialstränge geschnitten, ein Gasstrom transportiert die geschnittenen Materialabschnitte durch das Gehäuse, gegen dessen Wand sie aufgrund des Stromes prallen, was zu einer gewissen Abrundung führt, zusätzlich zur in der Regel gegebenen "intrinsischen" Abrundung, nachdem das noch weiche, energiereiche Material stets versucht, die energetisch günstigste Form, nämlich eine Kugelform einzunehmen.

Insbesondere auf dem pharmazeutischen Gebiet spielt die Hygiene eine extreme Rolle. Das heißt, jedwede Vorrichtung, also auch die in Rede stehende, ist gemäß strengen Auflagen sauber zu halten. Bei bekannten Vorrichtungen der in Rede stehenden Art ist dies jedoch problematisch, nachdem der Produktraum, also das Schneidgehäuse in der Regel nur umständlich zugänglich ist. Hier jedoch findet im Betrieb eine beachtliche Materialablagerung statt, nachdem alle geschnittenen Materialabschnitte an die Gehäusewand prallen, und dies häufig auch mehrfach.

Jedes Auftreffen ist mit einem gewissen Materialabtrag verbunden, der im Gehäuse bleibt.

Der Erfindung liegt damit das Problem zugrunde, eine Vorrichtung der eingangs genannten Art dahingehend zu verbessern, dass betriebsbedingte Verschmutzungen des Gehäuses verringert werden können.

Zur Lösung dieses Problems ist bei einer Vorrichtung der eingangs genannten Art erfindungsgemäß vorgesehen, dass eine Einrichtung zum zumindest abschnittsweisen Kühlen der Gehäusewand vorgesehen ist.

Der Erfindung liegt die Kenntnis zugrunde, dass der Materialabtrag und damit der Verschmutzungsgrad umso geringer ist, je kälter die Auftrefffläche ist, auf die die Materialabschnitte prallen. Die Materialabschnitte selbst sind, nachdem sie quasi unmittelbar aus dem Extruder kommen, wo sie zuvor geknetet und plastifiziert wurden und beachtlich hohe Temperaturen herrschen, noch relativ warm und weich. Treffen nun diese Materialabschnitte auf die ungekühlte Gehäusewand, die sich naturgemäß im Betrieb zusätzlich etwas erwärmt, so bleibt wesentlich mehr Material beim Auftreffen haften, als wenn die Auftrefffläche aktiv gekühlt ist. Im Übrigen erhält man aufgrund der Wandkühlung auch eine schnellere Abkühlung der Pellets selbst, nachdem eine gewisse Energiemenge der Pellets beim Auftreffen auf die aktiv gekühlte Prallfläche übergeht, ihnen also entzogen wird. Insgesamt ergibt sich aufgrund der aktiven Kühlung der Gehäusewand zumindest in den Bereichen, auf die die geschnittenen Materialabschnitte treffen, eine beachtliche Verringerung des aufprallbedingt haften bleibenden Materials und damit der Gesamtverschmutzung im Gehäusebereich.

Als Kühleinrichtung können zweckmäßigerweise ein oder mehrere Kanäle zum Führen eines die Gehäusewand kühlenden Kühlmittels vorgesehen sein, wobei als Kühlmittel vornehmlich eine Flüssigkeit, insbesondere Wasser oder eine Kühlsohle, die in einer geeigneten Kühleinrichtung gekühlt und vorrätig gehalten wird, verwendet werden kann. Über die Kanäle kann das Kühlmittel auf einfache Weise gezielt in den zu kühlenden Gehäuseabschnitt geführt werden. Zur Realisierung der Kanäle ist das Gehäuse zweckmäßigerweise doppelwandig ausgeführt. Das heißt, eine Gehäusewand ist vorteilhaft von einer zweiten, äußeren Wand umgeben, so dass zwischen beiden das Kühlmittel, dabei die zu kühlende Gehäusewand vollständig benetzend, zirkulieren kann.

Am zweckmäßigsten ist selbstverständlich eine vollständige Kühlung der Gehäusewand, sofern dies aufgrund der Gehäusekonzeption möglich ist. Das Gehäuse kann jedoch, um einen Zugang zum Gehäuseinneren zu ermöglichen, einen feststehenden Gehäusewandabschnitt und einen eine Zugangsöffnung bildenden bewegbaren Gehäusewandabschnitt aufweisen, welcher beispielsweise schwenkbar angelenkt ist, wobei zumindest der feststehende Gehäusewandabschnitt zumindest abschnittsweise kühlbar ist. Je nach Ausbildung kann aber auch zusätzlich der bewegbare Gehäusewandabschnitt zumindest abschnittsweise kühlbar sein.

Zur Kühlmittelförderung durch den oder die Kanäle ist vorteilhaft eine Kühlmittelfördereinrichtung in Form einer Pumpe oder dergleichen vorgesehen. Um das Kühlmittel durch den oder die Kanäle zu führen ist zweckmäßigerweise eine in einen (ersten) Kanal mündende gehäuseseitige Kühlmittelzufuhröffnung und eine von dem (ersten) oder einem weiteren Kanal abgehende Kühlmittelabfuhröffnung vorgesehen, wobei der erste und der gegebenenfalls weitere Kanal direkt oder indirekt miteinander kommunizieren. Die Zufuhr- und die Abfuhröffnungen sind vorteilhaft in einem unteren Gehäuseabschnitt vorgesehen, wobei der erste und der weitere Kanal in einem oberen Gehäuseabschnitt direkt oder indirekt miteinander kommunizieren. Ist nur ein Kanal vorgesehen, münden die Öffnungen nur in diesen. Hierdurch wird sichergestellt, dass das frisch zugeführte, noch kalte Kühlmittel tatsächlich das gesamte Gehäuse, soweit das Kühlmittel durch das Gehäuse gekühlt wird, durchströmt, bevor es abgezogen wird.

In entsprechender Weise kann auch eine gleichzeitige Kühlung des bewegbaren Gehäusewandabschnittes vorgesehen sein. Hierzu ist der am feststehenden Gehäusewandabschnitt vorgesehene erste Kanal mit einem am bewegbaren Gehäusewandabschnitt vorgesehenen zweiten Kanal über ein Verbindungsleitung verbunden, welcher zweite Kanal mit einem am bewegbaren Gehäusewandabschnitt vorgesehenen dritten Kanal kommuniziert, der mit dem weiteren, die Kühlmittelabfuhröffnung aufweisenden Kanal am feststehenden Gehäusewandabschnitt über eine Verbindungsleitung kommuniziert. Das heißt, das Kühlmittel wird zunächst in den Bereich des feststehenden Gehäusewandabschnitts gefördert, von wo es zum beweglichen Gehäusewandabschnitt strömt und dort zirkuliert, wonach es wieder zum feststehenden Gehäusewandabschnitt zurückgeführt und abgezogen wird.

Zur Verlängerung des Weges, entlang welchem ein Aufprall der Materialabschnitte auf die Gehäusewand möglich ist und mithin die Form der Pellets wie auch ihre Temperatur im Gehäuse beeinflusst werden kann, sieht eine vorteilhafte Weiterbildung des Erfindungsgedankens vor, dass das Gehäuse schnecken- oder spiralförmig ist. Das heißt, das Gehäuse selbst windet sich um beispielsweise 360° oder mehr, je nachdem, wie über den zugeführten Gasstrom noch eine hinreichende Austriebskraft für die geschnittene Materialabschnitte im hinteren Gehäusebereich, wo die abgeschnittenen Pellets zum Abzugsschacht oder dergleichen austreten, realisiert werden kann. Alternativ zu einer entsprechenden Ausführung des Gehäuses selbst ist es auch denkbar, wenn der Flüssigkeits- oder Gasstrom im Gehäuse im Wesentlichen spiralförmig strömt, so dass die Materialabschnitte strömungsbedingt auf eine Spiralbahn gezwungen werden.

Reinigungsprobleme ergeben sich ferner insbesondere in Ecken- oder Kantenbereichen im Gehäuse, die bevorzugte Ablagerungsstellen für Material bilden und die darüber hinaus oft auch schlecht zugänglich sind. Um dem entgegenzuwirken sieht eine Weiterbildung des Erfindungsgedankens ferner vor, dass die Gehäusewand, gegebenenfalls der feststehende und der bewegliche Gehäusewandabschnitt, querschnittlich gesehen ecken- und kantenfrei ist. Das heißt, insbesondere in dem Gehäusewandbereich, der die Prallfläche darstellt, sind keine Ecken oder Kanten vorgesehen, vorzugsweise ist die gesamte Gehäusewand entsprechend ausgeführt. Querschnittlich gesehen kann hierzu die Gehäusewand beziehungsweise der jeweilige Gehäusewandabschnitt im Wesentlichen U-förmig sein und drei im Wesentlichen ebene Abschnitte, die bogenförmig ineinander übergehen, aufweisen. Eine Alternative sieht vor, die entsprechenden Teile insgesamt im Wesentlichen bogenförmig auszuführen.

Um insbesondere im Hinblick auf die erfindungsgemäß vorgesehene ecken- und kantenfreie Form des Gehäuses beziehungsweise der Gehäusewand eine einfache Herstellungsmöglichkeit anzugeben ist ferner vorgesehen, die Gehäusewand beziehungsweise die jeweiligen Wandabschnitte aus zwei miteinander verbundenen, vorzugsweise verschweißten Halbschalen herzustellen.

Wird nun wie erfindungsgemäß vorgesehen ist die Gehäusewand, vorzugsweise allseitig, gekühlt, so ergibt sich von dem Materialeintrittsbereich, in dem vorzugsweise eine Ringdüse mit einer Vielzahl von Auslassöffnungen für das vom Extruder zugeführte, relativ heiße Material vorgesehen ist, ein beachtlicher Temperaturgradient zum gekühlten Gehäuse hin. Dem Austrittsbereich wird Wärme entzogen, was dazu führen kann, dass das Material bereits im Bereich der Ringdüse zu stark abkühlt und diese zusetzen kann. Um dem entgegen zu wirken sieht eine besonders zweckmäßige Weiterbildung des Erfindungsgedankens vor, dass zwischen der Gehäusewand und wenigstens einer Materialzufuhröffnung für das von der vorgeschalteten Zufuhreinrichtung, insbesondere dem Extruder kommende Material, also beispielsweise der Ringdüse, ein der thermischen Isolation dienender Isolator vorgesehen ist, der vorzugsweise scheiben- oder buchsenartig ausgeführt ist und beispielsweise aus PTFE bestehen kann. Dieser bildet eine thermische Isolationsbarriere zwischen dem heißen Zufuhr- oder Düsenbereich und dem kalten Gehäusebereich, so dass die beschriebenen Verfestigungs- und Zusetzprobleme nicht auftreten werden.

Wenngleich durch die Zufuhr des die geschnittenen Materialabschnitte durch das Gehäuse transportierenden Gases, das ja zwangsläufig ebenfalls der Kühlung dient, eine gewisse Materialkühlung eintritt, können, je nach dem wie lange der Förderbereich ist, die Materialabschnitte immer noch relativ warm sein, wenn sie den eigentlichen Gehäusebereich verlassen. Um hinsichtlich der Materialtemperatur auch im nachgeschalteten Bereich noch auf die Pellets einwirken zu können sieht eine vorteilhafte Erfindungsweiterbildung ferner vor, dass eine Abzugstrecke für das Gehäuse verlassende Pellets vorgesehen ist, die über Mittel zur Kühlung und/oder Temperierung der Pellets verfügt. Die Abzugstrecke kann beispielsweise einen Abzugsschacht mit einem nachgeschalteten Abzugschlauch oder nur einem Abzugschlauch umfassen, in jedem Fall sind aber entsprechende Kühl- oder Temperierungsmittel vorgesehen, die je nach Material eine gezielte Beeinflussung der Materialtemperatur zulassen. Mitunter ist lediglich eine sehr schnelle Kühlung erforderlich, mitunter ist aber auch eine Temperierung, also beispielsweise ein Halten auf einer etwas erhöhten Temperatur erforderlich, um beispielsweise Plastifiziervorgänge oder Formänderungsvorgänge noch weiterlaufen zu lassen. In jedem Fall ist der Abzugsstrecke ein Abscheider zugeordnet, der nach Art eines Zyklon arbeitet.

Das Gehäuse selbst ist zweckmäßigerweise über Spannmittel lösbar mit der Zufuhreinrichtung und einem das Schneidmesser antreibenden Antrieb verbindbar, wobei diese Spannmittel zweckmäßigerweise als Spannklemmen ausgeführt sind, die ein leichtes Öffnen und damit ein leichtes Zerlegen zu Reinigungszwecken oder dergleichen ermöglichen. Schließlich kann als bewegbarer Gehäusewandabschnitt anstelle eines Metallteils auch eine transparente Abschlussplatte, z.B. in Form einer Plexiglasscheibe oder dergleichen aufgesetzt werden, um zu Kontrollzwecken in das Gehäuseinnere blicken zu können.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Darstellung einer erfindungsgemäßen Vorrichtung, teilweise im Schnitt, in einer Seitenansicht,
- Fig. 2: die Vorrichtung aus Fig. 1, teilweise im Schnitt, in einer Frontansicht in Richtung der Linie II - II in Fig. 1,
- Fig. 3: die Vorrichtung aus Fig. 1 in einer Aufsicht in Richtung der Linie III - III in Fig. 1, und
- Fig. 4: eine vergrößerte Detailansicht, teilweise im Schnitt, des Materialeintrittsbereichs in das Gehäuse.

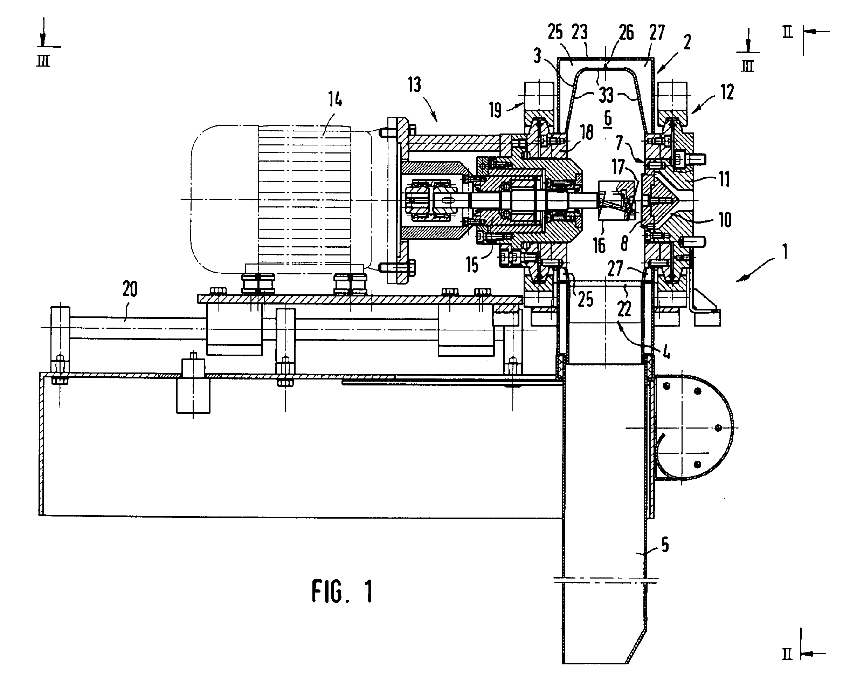

Fig. 1 zeigt eine erfindungsgemäße Vorrichtung 1, aufweisend ein Gehäuse 2 mit einer Gehäusewand 3, die das Gehäuse innenseitig begrenzt und eine Abzugsöffnung 4 aufweist, durch die im Gehäuse erzeugte Materialabschnitte nach unten in einen Abzugsschacht 5 austreten können.

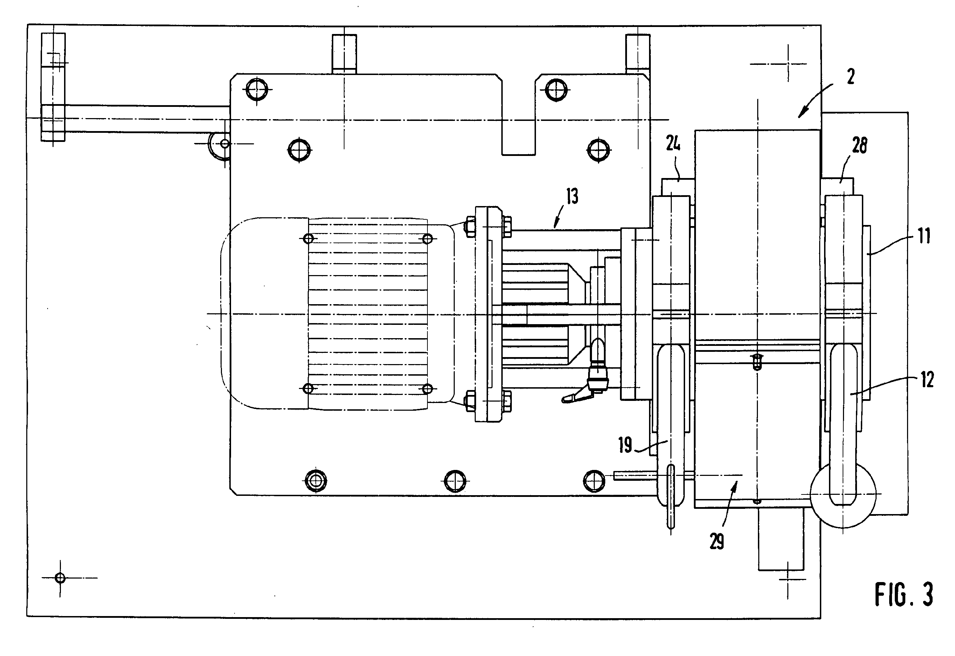

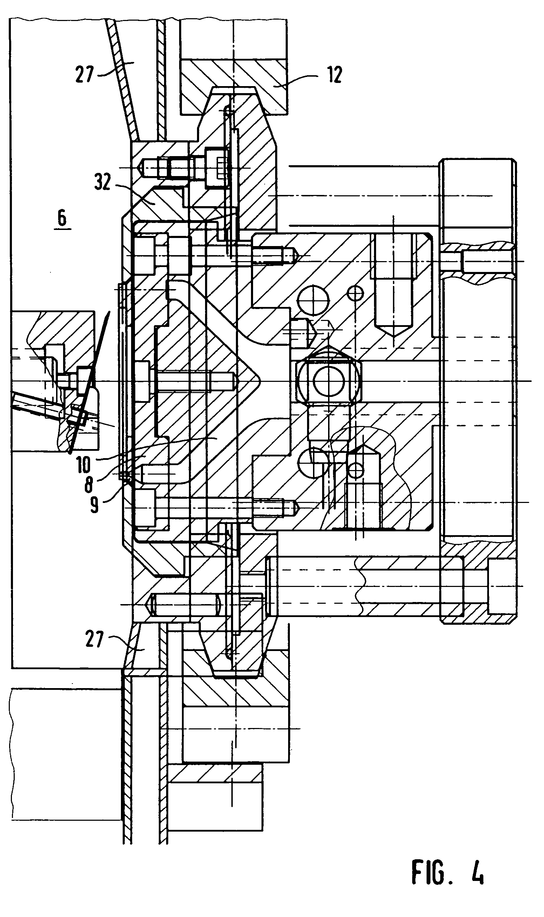

Frontseitig, in Fig. 1 rechts, ist das Gehäuseinnere 6 über ein Materialzufuhrteil 7 abgeschlossen, an dem, worauf bezüglich Fig. 4 noch eingegangen wird, eine Düsenscheibe 8 vorgesehen ist, die eine Vielzahl von Austrittsdüsen 9 aufweist, zu denen jeweils Materialkanäle 10 führen und über die von einem in Fig. 1 nicht näher gezeigten Extruder zugefördertes, zu bearbeitendes Material zugeführt wird. Fig. 1 zeigt in vereinfachter Form die Düsenplatte 8. Gezeigt ist ferner ein Adapter 11, in dem die Zufuhrkanäle 10 ausgebildet sind und der mit dem nicht näher gezeigten Extruder verbunden ist. Zur Verbindung des Adapters 11 (und damit des Extruders) mit der Vorrichtung 1 ist eine erste Spannklammer 12 vorgesehen, die - siehe Fig. 3 - auf einfache Weise zugänglich ist und nach Lösen nach oben geschwenkt werden kann, so dass die Flanschverbindung zwischen dem Adapter 11 und einem entsprechenden Gegenflansch am Zufuhrteil 7 gelöst werden kann. Dies ermöglicht ein einfaches Entkoppeln der Vorrichtung 1 vom Extruder.

Auf der gegenüberliegenden Seite ist das Gehäuseinnere 6 über den Antrieb 13 geschlossen. Der Antrieb 13 umfassend den Motor 14 sowie das Kupplungsaggregat 15 treibt eine Schneideinheit 16 im Gehäuseinneren, die vorzugsweise zwei Messer 17 aufweist, an. Auch an dieser Seite ist ein gehäuseseitiges Kupplungsteil 18 mit einem nach außen gerichteten Flansch vorgesehen, an dem Antriebsaggregat 13 ist ein Gegenflansch vorgesehen, die beide von einer Spannklammer 19 umgriffen werden, die, siehe Fig. 3, wie auch die Spannklammer 12 zum Lösen nach oben geschwenkt werden kann. Dies führt dazu, dass die Antriebseinheit 13, die auf einer Führungsschiene 20 geführt ist, aus ihrer Position in Fig. 1 nach links geschoben werden kann, so dass Zugang zum Gehäuseinneren 6 besteht.

Die Schneideinheit 16 beziehungsweise die Schneidmesser 17 rotieren um die gezeigte Wellenachse. Die Düsen 9 der Düsenscheibe und die Messer wirken so zusammen, dass aus den Düsen austretendes Material durch das vorbeirotierende Messer abgeschnitten wird.

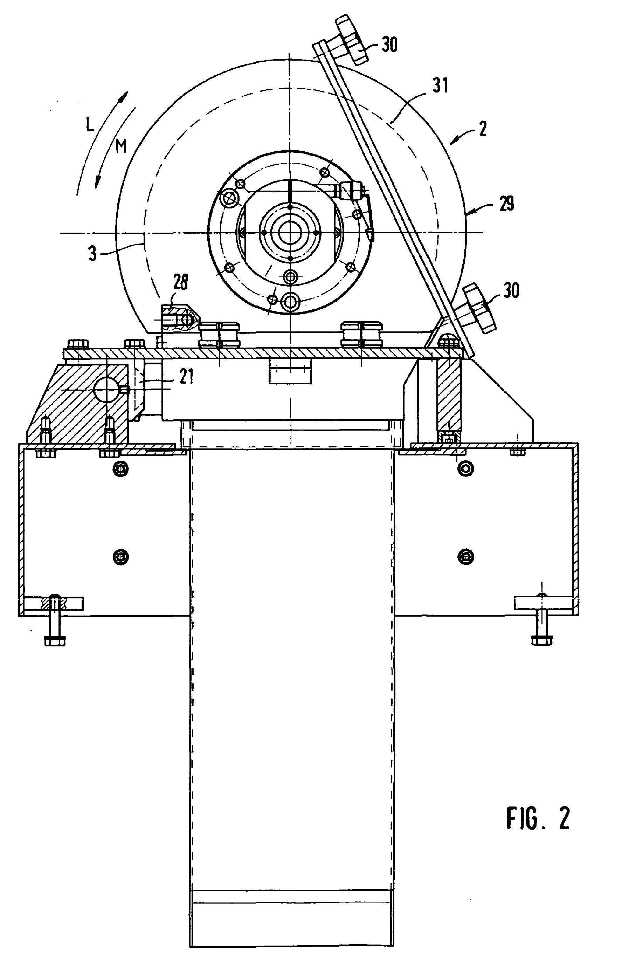

Um die abgeschnittenen Materialabschnitte zu formen beziehungsweise zu runden werden diese über einen Gasstrom, der im Gehäuseinneren 6 erzeugt wird, gefördert, wobei dieser Gasstrom gleichzeitig als Kühlluft dient. Hierzu ist in Fig. 2 gestrichelt weil in der Darstellung verdeckt eine Zufuhröffnung 21 mit einem entsprechenden Flansch zum Anschluss an beispielsweise ein Gebläse vorgesehen. Die hier quasi horizontal zugeführte Luft, die beispielsweise über einen Filter vorgefiltert sein kann oder bei der es sich um von extern zugeführte Pressluft handeln kann, wird über ein geeignetes Leitblech umgelenkt und tritt über einen Luftauslassschlitz 22 im Wesentlichen tangential in das in einer Frontansicht rundliche Gehäuse 2 beziehungsweise das Gehäuseinnere 6 ein, siehe die Figuren 1 und 2. Die Luftströmrichtung ist durch den Pfeil L dargestellt, sie ist der Rotationsrichtung der Schneidmesser, dargestellt durch den Pfeil M in Fig. 2, entgegengerichtet.

Diese Luftströmung bewirkt, dass die geschnittenen Materialabschnitte mitgenommen und gegen die Gehäusewand 3 prallen, wo sie rundlich deformiert werden. Nach ein- oder mehrmaligem Aufprall gelangen sie von der Luftströmung getrieben in den Bereich des Abzugschachtes 5 wo sie aus dem Gehäuseinneren 6 austreten.

Um zu Reinigungszwecken eine Kühlung der Gehäusewand 3 zu ermöglichen ist das Gehäuse 2 doppelwandig ausgeführt, es ist, siehe Fig. 1, eine Gehäuseaußenwand 23 vorgesehen, die zur inneren Gehäusewand beziehungsweise zum Gehäusewandabschnitt 3 beabstandet ist, so dass Kühlkanäle gebildet werden. In diesem zirkuliert ein Kühlmittel, das, siehe Fig. 3, über eine Kühlmittelzufuhröffnung 24, an die z.B. eine Kühlmittelzufuhrleitung, die von einer Kühlmittelpumpe kommt, angeschlossen werden kann. Das Kühlmittel, z.B. Wasser oder eine Kühlsohle, wird in einem unteren Gehäusebereich zugeführt. Das zugeführte Kühlmittel gelangt in einen ersten Kühlmittelkanal 25, der in der Fig. 1 gezeigten linken Gehäusehälfte ausgebildet ist, wo es nach oben ansteigt und zu einer Überlauföffnung 26 gelangt, wo es in einen weiteren Kühlmittelkanal 27, gebildet im rechten Gehäuseabschnitt in Fig. 1, überströmt und von wo es über die Kühlmittelabfuhröffnung 28 über eine nicht näher gezeigte Abfuhrleitung wieder zur Pumpe zurückgeführt wird. Die beiden Kühlmittelkanäle 25 und 27 sind durch einen nicht näher gezeigten, sich zwischen dem Gehäusewandabschnitt 3 und dem Außengehäuse 23 erstreckenden Wandabschnitte von einander getrennt, bis auf die Überlauföffnung 26. Auf diese Weise ist es möglich, den Gehäusewandabschnitt 3 großflächig zu kühlen.

Das Gehäuse 2 selbst kann geöffnet werden, wozu ein Gehäuseteil 29, das über entsprechende Befestigungsschrauben 30 fixiert werden kann, abgenommen werden kann. Der feststehende Gehäusewandabschnitt 3 erstreckt sich wie durch die gestrichelte Linie in Fig. 2 gezeigt im linken Gehäusebereich, während ein bewegbarer Gehäusewandabschnitt 31, der den Abschnitt 3 fortsetzt, im rechten Gehäuseteil 29 vorgesehen ist. Bei der in den Figuren gezeigten Ausführungsform ist dieser bewegbare Gehäusewandabschnitt 31 selbst nicht gekühlt, es ist jedoch denkbar, über geeignete Leitungen die beiden Kühlmittelkanäle 25 und 27 mit entsprechenden am bewegbaren Gehäuseteil 29 vorgesehenen Kühlmittelkanälen, die ebenfalls durch den doppelwandigen Aufbau realisiert sind, zu verbinden. Die aktive Kühlung des Gehäusewandabschnitts 3 bewirkt, dass wesentlich weniger Material beim Aufprallen der Materialabschnitte daran anhaftet, was aus Reinigungsgesichtspunkten von Vorteil ist, darüber hinaus kann auf diese Weise bereits im Gehäuse eine beachtliche zusätzliche Kühlung zu der über die Luftströmung bewirkte Kühlung hinaus erreicht werden.

Fig. 4 zeigt in einer vergrößerten Ansicht den Materialeintrittsbereich der Vorrichtung 1. Wie beschrieben wird das aus dem Extruder kommende, relativ heiße Material über die Materialkanäle 10 zu den Düsen 9 hin verteilt, wonach es in das Gehäuseinnere 6 austritt. Die Düsenscheibe 8 ist mittels eines scheiben- oder buchsenförmigen Isolators 32 zu dem daran anschließenden Kühlmittelkanal 27, der sich auch in den Bereich unterhalb der Düsenscheibe 8 erstreckt, siehe Fig. 4, thermisch isoliert, um zu vermeiden, dass durch unmittelbaren Kontakt zwischen dem Kühlmittelkanal 27, in dem das Kühlmittel zirkuliert, und dem heißen Bereich der Düsenscheibe diese gekühlt wird, so dass in ihr geführtes Material bereits dort eine Kühlung erfahren würde, was nachteilig ist, als sich die Düsen 9 gegebenenfalls durch zu schnell erkaltetes Material zusetzen können.

Wie beschrieben werden die geschnittenen und durch Aufprallen an dem Gehäusewandabschnitt 3 beziehungsweise dem Gehäusewandabschnitt 31 gerundeten Materialabschnitte über den Austragsschacht 5 abgezogen. Dieser kann über nicht näher gezeigte Kühl- oder Temperiereinrichtungen selbst thermisch auf die abgeführten Teilchen einwirken, indem sie beispielsweise noch weiter gekühlt werden, oder indem sie dort auf einer bestimmten Temperatur gehalten werden, sofern dies vom Material der Pellets her erforderlich ist. Über einen nicht näher gezeigten Abscheider werden die Pellets dann endgültig abgezogen. Zur Förderung der Pellets dient wie beschrieben der Gas- oder Luftstrom, der entweder mittels eines dem Gehäuse vorgeschalteten Gebläses, mittels einer dem Gehäuse (und gegebenenfalls auch dem Abzugsschacht 5) nachgeschalteten Saugeinrichtung oder mittels beider erzeugt werden kann.

Zur weiteren Verringerung der betriebsbedingten Verschmutzung des Gehäuses ist der Gehäusewandabschnitt 3 (und entsprechendes gilt, sofern vorgesehen auch für den Gehäusewandabschnitt 31) wie Fig. 1 zeigt im Querschnitt kanten- und eckenfrei. Er weist ersichtlich eine U-Form auf, wobei die in Fig. 1 gezeigten, im Wesentlichen ebenflächigen Wandabschnitte 33 bogenförmig ineinander übergehen, so dass sich im Stossbereich keine Kanten ergeben. Alternativ wäre auch eine querschnittlich gesehen komplett bogenförmige Ausführung denkbar. Zusammen mit der Kühlung des Wandabschnitts 3 kann vorteilhaft die aufprallbedingte Verschmutzung auf ein Minimum reduziert werden. Der Wandabschnitt 3 (wie auch der Wandabschnitt 31) besteht vorteilhaft aus zwei miteinander verbundenen, vorzugsweise verschweißten Halbschalen, die mit ihren Stirnseiten aneinander stoßen und dort verbunden sind, so dass das Gehäuse relativ einfach zu fertigen ist.

## Patentansprüche

1. Vorrichtung zur Herstellung gerundeter Pellets aus einem von einer vorgeschalteten Zufuhreinrichtung, insbesondere einem Extruder zugeführten verformbaren Material, umfassend ein Gehäuse mit einer rotierenden Schneideinheit zum Schneiden des Materials in Materialabschnitte, sowie Mittel zur Erzeugung eines Gasstroms im Gehäuse, durch dessen Wirkung die Materialabschnitte gegen eine Gehäusewand prallen, wobei sie sich abrunden, **dadurch gekennzeichnet, dass** eine Einrichtung zum zumindest abschnittsweisen Kühlen der Gehäusewand (3) vorgesehen ist.

2. Vorrichtung nach Anspruch 1, **dadurch gekennzeichnet, dass** als Kühleinrichtung ein oder mehrere Kanäle (25, 27) zum Führen eines die Gehäusewand (3) kühlenden Kühlmittels die ausgebildet sind.

3. Vorrichtung nach Anspruch 2, **dadurch gekennzeichnet, dass** das Gehäuse (2) zur Bildung eines Kühlmittelkanals (25, 27) zumindest abschnittsweise doppelwandig (3, 23) ausgeführt ist.

4. Vorrichtung nach einem der vorangehenden Ansprüche, **dadurch gekennzeichnet, dass** das Gehäuse (2) einen feststehenden Gehäusewandabschnitt (3) und einen eine Gehäusezugangsöffnung bildenden bewegbaren Gehäusewandabschnitt (29, 31) aufweist, wobei zumindest der feststehenden Gehäusewandabschnitt (3) zumindest abschnittsweise kühlbar ist.

5. Vorrichtung nach Anspruch 4, **dadurch gekennzeichnet, dass** sowohl der feststehende als auch der bewegbare Gehäusewandabschnitt (3, 31) zumindest abschnittsweise kühlbar ist.

6. Vorrichtung nach einem der Ansprüche 2 bis 5, **dadurch gekennzeichnet, dass** eine Kühlmittelfördereinrichtung zum Fördern des durch den oder die Kanäle (25, 27) zirkulierenden Kühlmittels vorgesehen ist.

7. Vorrichtung nach Anspruch 6, **dadurch gekennzeichnet, dass** eine in einen Kanal (25) mündende gehäuseseitige Kühlmittezufuhröffnung (24) und eine von dem oder einem weiteren Kanal (27) abgehende Kühlmittelabfuhröffnung (28) vorgesehen ist, wobei gegebenenfalls der erste und der weitere Kanal (25, 27) direkt oder indirekt miteinander kommunizieren.

8. Vorrichtung nach Anspruch 7, **dadurch gekennzeichnet, dass** die Zufuhr- und die Abfuhröffnungen (24, 28) in einem unteren Gehäuseabschnitt vorgesehen sind, und gegebenenfalls der erste und der weitere Kanal (25, 27) in einem oberen Gehäuseabschnitt direkt oder indirekt miteinander kommunizieren.

9. Vorrichtung nach Anspruch 7 oder 8, **dadurch gekennzeichnet, dass** der am feststehenden Gehäusewandabschnitt (3) vorgesehene erste Kanal (25) mit einem am bewegbaren Gehäusewandabschnitt (31) vorgesehenen zweiten Kanal über eine Verbindungsleitung kommuniziert, welcher zweite Kanal mit einem am bewegbaren Gehäusewandabschnitt (31) vorgesehenen dritten Kanal kommuniziert, der mit dem weiteren, die Kühlmittelabfuhröffnung (28) aufweisenden Kanal (27) am feststehenden Gehäusewandabschnitt (3) über eine Verbindungsleitung kommuniziert.

10. Vorrichtung nach einem der vorangehenden Ansprüche, **dadurch gekennzeichnet, dass** das Gehäuse schnecken- oder spiralförmig ist.

11. Vorrichtung nach einem der Ansprüche 1 bis 9, **dadurch gekennzeichnet, dass** der Gasstrom das Gehäuse im Wesentlichen spiralförmig durchströmt.

12. Vorrichtung nach einem der vorangehenden Ansprüche, **dadurch gekennzeichnet, dass** die Gehäusewand (3), gegebenenfalls der feststehende und der bewegbare Gehäusewandabschnitt (3, 31), querschnittlich gesehen ecken- und kantenfrei ist.

13. Vorrichtung nach Anspruch 10, **dadurch gekennzeichnet, dass** die Gehäusewand (3), gegebenenfalls der feststehende und der bewegbare Gehäusewandabschnitt (3, 31), im Wesentlichen U-förmig im Querschnitt ist und drei im Wesentlichen ebene Abschnitte (33), die bogenförmig ineinander übergehen, aufweist.

14. Vorrichtung nach Anspruch 10, **dadurch gekennzeichnet, dass** die Gehäusewand (3), gegebenenfalls der feststehende und der bewegbare Gehäusewandabschnitt (3, 31), im Wesentlichen bogenförmig im Querschnitt ist.

15. Vorrichtung nach einem der Ansprüche 10 bis 12, **dadurch gekennzeichnet, dass** die Gehäusewand (3), gegebenenfalls der feststehende und der bewegbare Gehäusewandabschnitt (3, 31), aus zwei miteinander verbundenen, vorzugsweise verschweißten Halbschalen besteht.

16. Vorrichtung nach einem der vorangehenden Ansprüche, **dadurch gekennzeichnet, dass** zwischen der Gehäusewand und einem wenigstens eine Materialzufuhröffnung (9) für das von der vorgeschalteten Zufuhreinrichtung, insbesondere dem Extruder kommende Material aufweisenden Teil (8) ein der thermischen Isolation dienender Isolator (32) vorgesehen ist.

17. Vorrichtung nach Anspruch 14, **dadurch gekennzeichnet, dass** der Isolator (32) scheiben- oder buchsenartig ist.

18. Vorrichtung nach Anspruch 14 oder 15, **dadurch gekennzeichnet, dass** der Isolator (32) aus PTFE besteht.

19. Vorrichtung nach einem der vorangehenden Ansprüche, **dadurch gekennzeichnet, dass** eine Abzugstrecke (5) für das Gehäuse (2) verlassende Pellets vorgesehen ist, die über Mittel zur Kühlung und/oder Temperierung der Pellets verfügt.

20. Vorrichtung nach Anspruch 19, **dadurch gekennzeichnet, dass** die Abzugstrecke einen Abzugsschacht (5) mit nachgeschaltetem Abzugschlauch oder nur einen Abzugschlauch umfasst.

21. Vorrichtung nach einem der vorangehenden Ansprüche, **dadurch gekennzeichnet, dass** das Gehäuse (2) über Spannmittel lösbar mit der Zufuhreinrichtung und einem das Schneidmesser (17) antreibenden Antrieb (13) verbindbar ist.

22. Vorrichtung nach Anspruch 21, **dadurch gekennzeichnet, dass** die Spannmittel als Spannklammern (12, 19) ausgebildet sind.

23. Vorrichtung nach einem der vorangehenden Ansprüche, **dadurch gekennzeichnet, dass** als bewegbarer Gehäusewandabschnitt eine transparente Abschlussplatte aufsetzbar ist.
